(19)

Europäisches
Patentamt
European
Patent Office
Office européen
des brevets

(11) **EP 4 207 901 A1**

(12) **EUROPEAN PATENT APPLICATION**
published in accordance with Art. 153(4) EPC

(43) Date of publication:
**05.07.2023   Bulletin 2023/27**

(21) Application number: **20957283.3**

(22) Date of filing: **16.10.2020**

(51) International Patent Classification (IPC):
***H04W 72/04*** *(2023.01)*

(52) Cooperative Patent Classification (CPC):
**H04W 72/04;** Y02D 30/70

(86) International application number:
**PCT/CN2020/121689**

(87) International publication number:
**WO 2022/077505 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **LI, Chao
Shenzhen, Guangdong 518129 (CN)**

• **ZHANG, Tianhong
Shenzhen, Guangdong 518129 (CN)**
• **HUANG, Haining
Shenzhen, Guangdong 518129 (CN)**
• **YANG, Fan
Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **TRANSMISSION RESOURCE DETERMINATION METHOD AND APPARATUS**

(57)   This application discloses a transmission resource determining method and an apparatus, so that a terminal device can determine an interval between candidate listening resources and/or a quantity of candidate resources based on at least one of a size of a resource selection window, a size of a sensing window, or a resource reservation period, and further determine a transmission resource in the candidate resources based on the interval between the candidate listening resources and/or the quantity of candidate resources. This can improve resource selection reliability during NR-V2X transmission.

```
┌─────────────────────────────────────────────────────┐
│           S101: Obtain first information              │
└─────────────────────────────────────────────────────┘
                          │
                          ▼
┌─────────────────────────────────────────────────────┐
│  S102: Determine a first parameter based on the first │
│        information                                     │
└─────────────────────────────────────────────────────┘
                          │
                          ▼
┌─────────────────────────────────────────────────────┐
│  S103: Determine, in candidate resources based on the │
│  first parameter, a transmission resource for sidelink │
│  transmission                                          │
└─────────────────────────────────────────────────────┘
```

FIG. 8

**Description**

**TECHNICAL FIELD**

This application relates to the field of wireless communication technologies, and in particular, to a transmission resource determining method and an apparatus.

**BACKGROUND**

Currently, a vehicle may obtain road condition information or receive an information service in time through vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. The communication manners may be collectively referred to as vehicle-to-everything (vehicle-to-everything, V2X) communication.

In vehicle-to-everything communication, a communication manner in which UE autonomously selects a resource without control of a base station needs to be supported. In designs of LTE-V2X (or referred to as LTE-V) and NR-V2X (or referred to as NR-V) in the conventional technology, there is a resource selection manner based on complete sensing. The resource selection manner based on complete sensing means that the UE performs resource listening on consecutive resources, and selects, based on listening results, a resource used for sending data. A principle is as follows: A resource and a location that are relatively clean or unoccupied when data needs to be sent are predicted based on a location of an occupied resource that has appeared in the past, to select an optimal transmission resource. In the complete sensing manner, because a receiver needs to perform continuous listening at all time, power consumption is high.

To further reduce power consumption during resource selection, a resource selection manner based on partial sensing is further introduced in R14 of LTE-V2X. To be specific, discontinuous listening is performed in time domain, to reduce listening time, and reduce power consumption generated when the UE monitors the resource.

However, a service type in NR-V2X includes a periodic service and an aperiodic service while a service type in LTE-V2X includes only a periodic service. Because the aperiodic service has strong unpredictability, randomness, and short-time burst, directly applying an equal-interval listening manner in LTE-V2X to NR-V2X reduces reliability of resource selection during NR-V2X transmission.

**SUMMARY**

This application provides a transmission resource determining method and an apparatus, to improve resource selection reliability during NR-V2X transmission.

According to a first aspect, an embodiment of this application provides a transmission resource determining method. The method may be performed by a terminal device or a component (such as a processor, a chip, or a chip system) in a terminal device. The terminal device supports V2X communication.

According to the method, the terminal device may obtain first information. The first information includes at least one of a size of a resource selection window, a size of a sensing window, or a resource reservation period. The terminal device may further obtain a first parameter based on the first information. The first parameter includes an interval between candidate listening resources and/or a quantity of candidate resources. The candidate resources are within the resource selection window. The method further includes determining, in the candidate resources based on the first parameter, a transmission resource for sidelink transmission.

According to the foregoing method, the terminal device may determine the interval between the candidate listening resources and/or the quantity of candidate resources based on at least one of the size of the resource selection window, the size of the sensing window, or the resource reservation period, and further determine the transmission resource in the candidate resources based on the interval between the candidate listening resources and/or the quantity of candidate resources. This can improve resource selection reliability during NR-V2X transmission.

In a possible design, the first information includes the size of the resource selection window. The first parameter includes the interval. The interval and the size of the resource selection window meet:

$$\mathbf{P_{step}} = \left\lceil \frac{N}{M} \cdot T_{scal} \right\rceil, \ \mathbf{P_{step}} = floor \left\{ \frac{N}{M} \cdot T_{scal} \right\}, \text{ or } \mathbf{P_{step}} = \frac{N}{M} \cdot T_{scal}.$$

$P_{step}$ is the interval. N is a quantity of time units used for sidelink transmission in first duration. A length of the first duration is M slots or M milliseconds. M and N are positive integers. ⌈ ⌉ represents rounding up. *floor*{ }represents rounding down. $T_{scal}$ is the size of the resource selection window.

According to this design, the interval is the size of the resource selection window, and resources in all resource selection windows may be detected based on the interval. This reduces a probability of missing detection.

In a possible design, the first information includes the size of the sensing window. The first parameter includes the interval. The terminal device may determine, based on the size of the sensing window, the interval corresponding to the size of the sensing window. Alternatively, the terminal device may determine, based on the size of the sensing window, the interval that meets a first function relationship with the size of the sensing window. According to this design, a size of one sensing window may be associated with one **$P_{step}$**. In other words, one **$P_{step}$** may be determined based on the size of one sensing window, to implement flexible configuration of **$P_{step}$**.

In a possible design, the terminal device may further obtain a first correspondence. The first correspondence is a correspondence between a size of at least one sensing window and at least one interval. The size of the at least one sensing window includes the size of the sensing window. The at least one interval includes the interval.

In a possible design, the first function relationship between the size of the sensing window and the interval includes:

$$P_{step} = \frac{P_T}{L};$$

$$P_{step} = \left\lceil \frac{P_T}{L} \right\rceil;$$

or

$$P_{step} = floor\{\frac{P_T}{L}\}.$$

$P_{step}$ is the interval. $P_T$ is the size of the sensing window. L is a specified value, or L is indicated by a network device. L is a positive integer. $\lceil \ \rceil$ represents rounding up. *floor*{ } represents rounding down.

In a possible design, the first information includes the resource reservation period. The first parameter includes the interval. The terminal device may determine the interval corresponding to the resource reservation period.

In a possible design, the terminal device may obtain a second correspondence, and determine, based on the second correspondence, the interval corresponding to the resource reservation period. The second correspondence is a correspondence between at least one resource reservation period and at least one interval. The at least one resource reservation period includes the resource reservation period. The at least one interval includes the interval. According to this design, the interval based on the resource reservation period can be determined.

In a possible design, the first information includes the resource reservation period. The first parameter includes the interval. The terminal device may determine the interval based on a resource reservation period set to which the resource reservation period belongs. The resource reservation period set includes at least one resource reservation period. The at least one resource reservation period includes the resource reservation period. The resource reservation period set may be configured by using signaling. According to this design, the interval based on the resource reservation period can be determined.

In a possible design, when a size of the resource reservation period does not exceed a specified time length, the interval meets:

$$\mathbf{P_{step}} = \max\{\min\_P, Pt\};$$

or

$$\mathbf{P_{step}} = \min\{\min\_P, Pt\}.$$

min_P is a least common multiple of all resource reservation periods in the at least one resource reservation period, and Pt is a specified value;
**$P_{step}$** is a smallest resource reservation period in the at least one resource reservation period; or
**$P_{step}$** is a largest resource reservation period in the at least one resource reservation period.

According to this design, the interval can be flexibly determined based on the resource reservation period.

In a possible design, the specified time length is predefined or configured by using signaling.

In a possible design, the first information includes the size of the sensing window. The first parameter includes the quantity of candidate resources. The terminal device may determine, based on the size of the sensing window, the quantity of candidate resources corresponding to the size of the sensing window. According to this design, the quantity of candidate resources may be flexibly determined based on the size of the sensing window.

In a possible design, the terminal device may obtain a third correspondence. The third correspondence includes a correspondence between the size of the at least one sensing window and a quantity of at least one candidate resource. The size of the at least one sensing window includes the size of the sensing window. The quantity of the at least one candidate resource includes the quantity of candidate resources.

In a possible design, the first parameter may include the interval. The interval is represented as α*Pstep. α is determined based on the first information. Pstep is a constant.

In a possible design, the candidate resource includes Y slots. An interval between a last slot y in the Y slots and a slot m of detected control information on the candidate listening resource is less than or equal to a second parameter. The second parameter is any one of the following:

$$P'_{rsvp\_RX} + P'_{T_{scal}};$$

$$P'_{rsvp\_RX} + Y;$$

$$P'_{rsvp\_RX} + P_{step};$$

or

$$P_{step} + Y.$$

$P'_{rsvp\_RX}$ represents a quantity of logical slots in the resource reservation period. $P'_{T_{scal}}$ indicates a quantity of logical slots in the resource selection window.

According to this design, the interval between the slot m and the last slot in the candidate resource Y may be limited, to reduce unnecessary blind detection locations.

In a possible design, the slot y and the slot m are physical slots or logical slots in a resource pool.

In a possible design, the first parameter includes a first interval between the candidate listening resources. The first interval is determined based on a resource reservation period that is not less than a specified time length. The terminal device may further receive second information. The second information indicates a first sensing window. The first sensing window is located before a first time domain position (that is, a slot n in this application). A size of the first sensing window is determined based on the first interval. The first time domain position is a moment at which the terminal device is triggered to determine the transmission resource. Subsequently, the terminal device may determine the transmission resource based on the first sensing window. This can further improve resource selection reliability.

In a possible design, the first parameter further includes a third interval between the candidate listening resources. The third interval is determined based on a resource reservation period that is less than the specified time length. The terminal device may further receive third information from a network device. The third information indicates a second sensing window. A size of the second sensing window is determined based on the third interval. The second sensing window is located after the first time domain position. Subsequently, the terminal device may determine the transmission resource based on the second sensing window. This can further improve resource selection reliability.

According to a second aspect, an embodiment of this application provides a transmission resource determining method. The method may be performed by a network device or a component (such as a processor, a chip, or a chip system) in a network device.

According to the method, the network device may determine first information and send the first information to a terminal device. The first information is used to determine a first parameter. For descriptions of the first information and the first parameter, refer to the first aspect.

In a possible design, the network device may further determine and send at least one of a first correspondence, a second correspondence, or a third correspondence to the terminal device. For descriptions of the first correspondence, the second correspondence, or the third correspondence, refer to the first aspect.

In a possible design, the first parameter includes a first interval between candidate listening resources. The first interval is determined based on a resource reservation period that is not less than a specified time length. The network device may further send second information to the terminal device. The second information indicates a first sensing window. The first sensing window is located before a first time domain position (that is, a slot n in this application). A size of the first sensing window is determined based on the first interval. The first time domain position is a moment at which the terminal device is triggered to determine the transmission resource.

In a possible design, the first parameter further includes a third interval between the candidate listening resources. The third interval is determined based on a resource reservation period that is less than the specified time length. The network device may further send third information to the terminal device. The third information indicates a second sensing window. A size of the second sensing window is determined based on the third interval. The second sensing window is located after the first time domain position.

For beneficial effects shown in the second aspect, refer to the beneficial effects of the first aspect.

According to a third aspect, an embodiment of this application provides a communication apparatus, to implement the method implemented by the terminal device in any one of the first aspect or the possible designs of the first aspect. The apparatus includes a corresponding unit or component configured to perform the foregoing method. The unit included in the apparatus may be implemented by software and/or hardware. The apparatus may be, for example, a terminal device, or a component, a baseband chip, a chip system, or a processor that can support the terminal device in implementing the foregoing method.

For example, the communication apparatus may include modular components such as a transceiver unit (or referred to as a communication module or a transceiver module) and a processing unit (or referred to as a processing module). These modules may perform corresponding functions of the terminal device in the first aspect or any possible design of the first aspect. When the communication apparatus is the terminal device, the transceiver unit may be a transmitter and a receiver, or a transceiver obtained by integrating the transmitter and the receiver. The transceiver unit may include an antenna, a radio frequency circuit, and the like. The processing unit may be a processor, for example, a baseband chip. When the communication apparatus is a component having a function of the foregoing terminal device, the transceiver unit may be a radio frequency unit, and the processing unit may be a processor. When the communication apparatus is a chip system, the transceiver unit may be an input/output interface of the chip system. The processing unit may be a processor of the chip system, for example, a central processing unit (central processing unit, CPU).

The transceiver unit may be configured to perform receiving and/or sending performed by the terminal device in the first aspect or any possible design of the first aspect. The processing unit may be configured to perform actions other than receiving and sending performed by the terminal device in the first aspect or any possible design of the first aspect, for example, determining a first parameter based on first information.

According to a fourth aspect, an embodiment of this application provides a communication apparatus, to implement the method implemented by the first network device in the second aspect or any possible design of the second aspect. The apparatus includes a corresponding unit or component configured to perform the foregoing method. The unit included in the apparatus may be implemented by software and/or hardware. The apparatus may be, for example, a network device, or a component, a baseband chip, a chip system, or a processor that can support the network device in implementing the foregoing method.

For example, the communication apparatus may include modular components such as a transceiver unit (or referred to as a communication module or a transceiver module) and a processing unit (or referred to as a processing module). These modules may perform corresponding functions of the network device in the second aspect or any possible design of the second aspect. When the communication apparatus is the network device, the transceiver unit may be a transmitter and a receiver, or a transceiver obtained by integrating the transmitter and the receiver. The transceiver unit may include an antenna, a radio frequency circuit, and the like. The processing unit may be a processor, for example, a baseband chip. When the communication apparatus is a component having a function of the foregoing network device, the transceiver unit may be a radio frequency unit, and the processing unit may be a processor. When the communication apparatus is a chip system, the transceiver unit may be an input/output interface of the chip system. The processing unit may be a processor of the chip system, for example, a central processing unit (central processing unit, CPU).

The transceiver unit may be configured to perform receiving and/or sending performed by the network device in the second aspect or any possible design of the second aspect. The processing unit may be configured to perform actions other than receiving and sending performed by the network device in the second aspect or any possible design of the second aspect.

According to a fifth aspect, a communication system is provided. The communication system includes the communication apparatuses according to the third aspect and the fourth aspect.

According to a sixth aspect, a computer-readable storage medium is provided. The computer-readable storage medium is configured to store computer instructions. When the computer instructions are run on a computer, the computer is enabled to perform the method shown in any one of the first aspect and the second aspect or the possible implementations of the first aspect and the second aspect.

According to a seventh aspect, a computer program product including instructions is provided. The computer program product is configured to store computer instructions. When the computer instructions are run on a computer, the computer is enabled to perform the method shown in any one of the first aspect and the second aspect or the possible implementations of the first aspect and the second aspect.

According to an eighth aspect, a circuit is provided. The circuit is coupled to a memory. The circuit is configured to perform the method shown in any one of the first aspect and the second aspect or the possible implementations of the first aspect and the second aspect. The circuit may include a chip circuit.

**BRIEF DESCRIPTION OF DRAWINGS**

FIG. 1 is a schematic diagram of time domain of a partial sensing solution;

FIG. 2 is a schematic diagram of an architecture of a communication system according to an embodiment of this application;

FIG. 3 is a schematic diagram of an architecture of another communication system according to an embodiment of this application;

FIG. 4 is a schematic diagram of a structure of a communication apparatus according to an embodiment of this application;

FIG. 5 is a schematic diagram of a structure of another communication apparatus according to an embodiment of this application;

FIG. 6 is a schematic diagram of a structure of still another communication apparatus according to an embodiment of this application;

FIG. 7 is a schematic diagram of a structure of yet another communication apparatus according to an embodiment of this application;

FIG. 8 is a schematic flowchart of a transmission resource determining method according to an embodiment of this application;

FIG. 9 is a schematic diagram of time domain of a partial sensing solution according to an embodiment of this application;

FIG. 10 is a schematic diagram of time domain of another partial sensing solution according to an embodiment of this application;

FIG. 11 is a schematic diagram of time domain of still another partial sensing solution according to an embodiment of this application; and

FIG. 12 is a schematic diagram of time domain of yet another partial sensing solution according to an embodiment of this application.

**DESCRIPTION OF EMBODIMENTS**

To make the objectives, technical solutions, and advantages of this application clearer, the following further describes this application in detail with reference to the accompanying drawings. A specific operation method in a method embodiment may also be applied to an apparatus embodiment or a system embodiment.

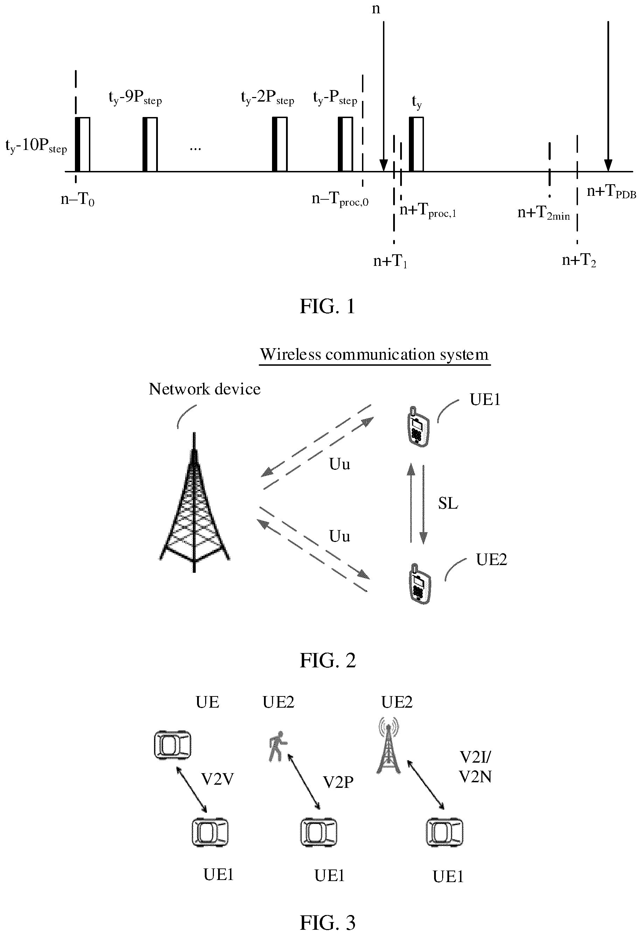

A resource determining method provided in embodiments of this application may be applied to a sidelink transmission communication scenario shown in FIG. 2. The communication scenario may include UE 1 (or referred to as a first terminal device) and UE 2 (or referred to as a second terminal device). For example, the UE 1 and/or the UE 2 may be a terminal device such as a terminal (terminal), a mobile station (mobile station, MS), a mobile terminal (mobile terminal), or a component such as a chip or a chip system in a terminal device. For example, the UE 1 and/or the UE 2 in embodiments of this application may be a mobile phone (or referred to as a "cellular" phone), a computer with a mobile terminal, a smart vehicle, an Internet of Vehicles-related smart device (for example, a smart street lamp), a roadside unit (roadside unit, RSU), a wearable device, or the like. Alternatively, the UE 1 and/or the UE 2 may be a portable, pocket-sized, handheld, computer built-in, or in-vehicle mobile apparatus, for example, an on-board unit (on-board unit, OBU). Alternatively, the UE 1 and/or the UE 2 may be a communication chip having a communication module, for example, a chip in a handheld or vehicle-mounted device.

It should be understood that a specific form of each of the UE 1 and the UE 2 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device, another processing device connected to a wireless modem, a vehicle-mounted device, an unmanned vehicle, a wearable device, a terminal apparatus in a future 5G network, a terminal apparatus in a future evolved PLMN network, or the like. The UE 1 and the UE 2 may be deployed on land, for example, deployed in indoors or outdoors. The UE 1 and the UE 2 may be handheld by a user or in-vehicle. The terminal device may be deployed on water (for example, on a ship), or the terminal device may be deployed in air (for example, on an airplane, a balloon, or a satellite).

It should be understood that the UE 1 and the UE 2 may be configured to support SL communication. For example, SL communication may be performed between the UE 1 and the UE 2 through a direct communication (PC5) air interface. In addition, the UE 1 and/or the UE 2 can further communicate with a network device (for example, a base station) (for example, communicate through a universal user to network interface (universal user to network interface, Uu air interface)), and receive a network service provided by the network device. It should be understood that a resource used for SL communication between the UE 1 and the UE 2 may be scheduled by the network device by using sidelink control information (sidelink control information, SCI), or may be selected by the UE 1 and/or the UE 2 through sensing. Therefore, the network device is not necessary for V2X communication. Subsequently, V2X communication scheduled by the network device may be referred to as V2X communication in which the network device participates. V2X communication that can be performed without scheduling by the network device is referred to as V2X communication in which no network device participates.

For example, a function of the network device in this application may be implemented by an access network device. The access network device is referred to as an access network station (access network station). The access network device is a device that provides a network access function, for example, a radio access network (radio access network, RAN) base station. The network device may specifically include a base station (base station, BS), a radio resource management device configured to control the base station, and the like. The network device may further include a relay station (relay device), an access point, a base station in the future 5G network, a base station in the future evolved PLMN network, an NR base station, or the like. The network device may be a wearable device or a vehicle-mounted device. The network device is implemented by an RSU. Alternatively, the network device may be a chip having a communication module. It should be understood that in this application, the network device may support communication through a Uu interface. For example, the network device configures, for the UE 1 and/or the UE 2 through the Uu interface, information such as a transmission resource, an SL parameter, or a sensing parameter for SL communication. The network device may access a core network, for example, a 5G core network, to obtain a service on a core network side.

FIG. 3 shows a possible architecture of the sidelink transmission communication scenario. As shown in FIG. 3, based on different specific forms of the UE 1 and the UE 2, a V2X system may be further classified into: a V2V system, a V2P system, a V2I system, and a V2N system.

In the V2V system, the UE 1 and the UE 2 respectively serve as vehicles or vehicle-mounted devices to perform SL communication. In the V2P system, one of the UE 1 and the UE 2 serves as a vehicle or a vehicle-mounted device, and the other serves as a communication device held by a pedestrian or in another manner to perform SL communication. In the V2I system, one of the UE 1 and the UE 2 serves as a vehicle or a vehicle-mounted device, and the other serves as an infrastructure such as an RSU, a roadside station, or a smart street lamp to perform SL communication. In the V2N system, one of the UE 1 and the UE 2 serves as a transmit end, and the other serves as a receive end, so that SL communication is performed between the transmit end and the receive end.

Currently, the transmission resource in SL communication may be configured by the network device and/or selected by a V2X device based on sensing. When the network device configures the transmission resource, the UE 1 and the UE 2 need to receive the transmission resource from the network device, and perform SL communication based on the transmission resource. In a process of performing resource selection based on UE sensing, the UE 1 and the UE 2 may select the transmission resource from a resource pool through sensing selection based on a sensing parameter. The sensing parameter (for example, an index of a listening resource in a subsequent listening resource and a quantity of slots included in a candidate resource) and/or the resource pool may be configured by the network device or preconfigured.

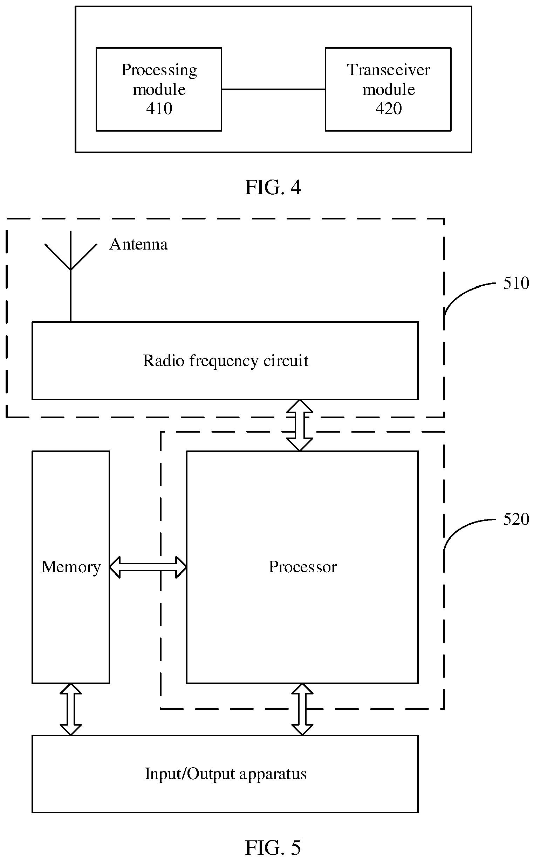

For example, FIG. 4 is a possible schematic diagram of a structure of a terminal device. The structure may include a processing module 410 and a transceiver module 420. For example, the structure shown in FIG. 4 may be a terminal device, or may be a chip used in a terminal device, or another combined component, a part (or referred to as a component), or the like that has a function of the terminal device in this application. When the structure is the terminal device, the transceiver module 420 may be a transceiver. The transceiver may include an antenna, a radio frequency circuit, and the like. The processing module 410 may be a processor, for example, a baseband processor. The baseband processor may include one or more central processing units (central processing units, CPU). When the structure is a part that has the function of the terminal device shown in this application, the transceiver module 420 may be a radio frequency unit. The processing module 410 may be a processor, for example, a baseband processor. When the structure is a chip system, the transceiver module 420 may be an input/output interface of a chip (for example, a baseband chip). The processing module 410 may be a processor of the chip system, and may include one or more central processing units. It should be understood that the processing module 410 in this embodiment of this application may be implemented by a processor or a processor-related circuit component, and the transceiver module 420 may be implemented by a transceiver or a transceiver-related circuit component.

For example, the processing module 410 may be configured to perform all operations other than receiving and sending operations performed by the terminal device in any embodiment of this application, for example, a processing operation, and/or another process configured to support the technology described in this specification, for example, generate a message, information, and/or signaling sent by the transceiver module 420, and process a message, information, and/or signaling received by the transceiver module 420. The transceiver module 420 may be configured to perform all receiving and sending operations performed by the terminal device in any embodiment of this application, and/or another process configured to support the technology described in this specification, for example, send a DMRS.

In addition, the transceiver module 420 may be a function module. The function module can complete both a sending operation and a receiving operation. For example, the transceiver module 420 may be configured to perform all the sending operations and receiving operations performed by the terminal device. For example, when performing the sending operations, the transceiver module 420 may be considered as a sending module; when performing the receiving operations, the transceiver module 420 may be considered as a receiving module. Alternatively, the transceiver module 420 may include two function modules. The transceiver module 420 may be considered as a general term of the two function modules. The two function modules are respectively a sending module and a receiving module. The sending module is configured to complete a sending operation. For example, the sending module may be configured to perform all the sending operations performed by the terminal device. The receiving module is configured to complete a receiving operation. The receiving module may be configured to perform all the receiving operations performed by the terminal device.

FIG. 5 is a schematic diagram of a structure of another terminal device. For ease of understanding and convenience of figure illustration, as shown in FIG. 5, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display screen, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 5. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the terminal device (where the transceiver unit may be one functional unit, and the functional unit can implement a sending function and a receiving function; or the transceiver unit may include two functional units: a receiving unit that can implement a receiving function and a sending unit that can implement a sending function), and the processor that has a processing function may be considered as a processing unit of the terminal device. As shown in FIG. 5, the terminal device includes a transceiver unit 510 and a processing unit 520. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 510 and that is configured to implement a receiving function may be considered as a receiving unit, and a component that is in the transceiver unit 510 and that is configured to implement a sending function may be considered as a sending unit. That is, the transceiver unit 510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 510 may correspond to the transceiver module 420, or the transceiver module 420 may be implemented by the transceiver unit 510. The transceiver unit 510 is configured to perform a sending operation and a receiving operation of the terminal device in embodiments of this application, and/or configured to support another process of the technology described in this specification. The processing unit 520 may correspond to the processing module 410, or the processing module 410 may be implemented by the processing unit 520. The processing unit 520 is configured to perform operations other than receiving and sending operations on the terminal device in embodiments shown in this application, for example, configured to perform all the receiving and sending operations performed by the terminal device in embodiments of this application, and/or configured to support another process of the technology described in this specification.

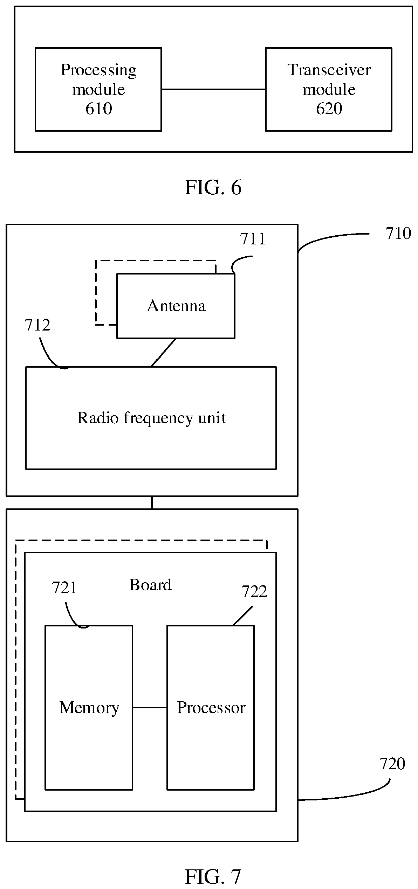

FIG. 6 is a schematic diagram of a structure of a network device according to an embodiment of this application. The structure may include a processing module 610 and a transceiver module 620. For example, the structure may be a network device, or may be a chip used in a network device, or another combined component or a part that has a function of the network device shown in this application. When the structure is the network device, the transceiver module 620 may be a transceiver. The transceiver may include an antenna, a radio frequency circuit, and the like. The processing module 610 may be a processor, and the processor may include one or more CPUs. When the structure is a component that has the function of the network device shown in this application, the transceiver module 620 may be a radio frequency unit. The processing module 610 may be a processor, for example, a baseband processor. When the structure is a chip system, the transceiver module 620 may be an input/output interface of a chip (for example, a baseband chip). The processing module 610 may be a processor of the chip system, and may include one or more central processing units. It should be understood that the processing module 610 in this embodiment of this application may be implemented by a processor or a processor-related circuit component, and the transceiver module 620 may be implemented by a transceiver or a transceiver-related circuit component.

For example, the processing module 610 may be configured to perform all operations other than receiving and sending operations performed by the network device in embodiments of this application, for example, generate a message, information, and/or signaling sent by the transceiver module 620, and/or process a message, information, and/or signaling received by the transceiver module 620, and/or support another process of the technology described in this specification. The transceiver module 620 may be configured to perform all sending and/or receiving operations performed by the network device in embodiments of this application, and/or configured to support another process of the technology described in this specification.

FIG. 7 is a schematic diagram of a structure of another network device. As shown in FIG. 7, the network device includes a structure such as a processor, a memory, a radio frequency unit (or a radio frequency circuit), or an antenna. The processor is mainly configured to: process a communication protocol and communication data, control the network device, execute a software program, process data of the software program, and the like. The memory is mainly configured to store the software program and data. The radio frequency unit is mainly configured to: perform conversion between a baseband signal and a radio frequency signal, and process the radio frequency signal.

As shown in FIG. 7, the network device may include a transceiver module 710 and a processing module 720. The transceiver module may include a sending module and a receiving module, or the transceiver module 710 may be a module that can implement sending and receiving functions. The transceiver module 710 may correspond to the transceiver module 620 in FIG. 6. In other words, the transceiver module 710 performs an action performed by the transceiver module 620. Optionally, the transceiver module 710 may also be referred to as a transceiver, a transceiver circuit, or the like, and may include at least one antenna 711 and a radio frequency unit 712. The transceiver module 710 is mainly configured to receive and send a radio frequency signal and perform conversion between the radio frequency signal and a baseband signal. The processing module 710 is mainly configured to perform baseband processing, control the network device, and the like. The transceiver module 710 and the processing module 720 may be physically disposed together, or may be physically disposed separately, that is, a distributed base station.

For example, the transceiver module 710 may include one or more radio frequency units, for example, a remote radio unit (remote radio unit, RRU). The processing module 720 may include one or more baseband units (baseband unit, BBU) (which may also referred to as a digital unit, (digital unit, DU)).

In an example, the processing module 720 may include one or more boards, and a plurality of boards may jointly support a radio access network (for example, an LTE network) in a single access standard, or may separately support radio access networks (for example, an LTE network, a 5G network, or another network) in different access standards. The processing module 720 further includes a memory 721 and a processor 722. The memory 721 is configured to store necessary instructions and necessary data. The processor 722 is configured to control the base station to perform a necessary action, for example, configured to control the base station to perform an operation procedure related to the network device in embodiments shown in this application. The memory 721 and the processor 722 may serve one or more boards. In other words, a memory and a processor may be disposed on each board. Alternatively, a plurality of boards may share a same memory and a same processor. In addition, a necessary circuit may further be disposed on each board.

The following briefly describes related concepts in embodiments of this application.

1. Resource pool, sensing window, and selection window

The resource pool is a resource set that is configured by using signaling for scheduling by UE 1 and that is used for autonomous resource selection. The resource pool is used by the UE 1 to send and/or receive sidelink data. A unit of a resource occupied by the resource pool in time domain is a preset quantity of symbols (for example, 2 symbols, 4 symbols, 6 symbols, 10 symbols, 12 symbols, or 14 symbols), a slot, or a subframe. A unit of the resource occupied in frequency domain is a resource block, a subchannel, or the like.

A listening window (or referred to as a sensing window) (sensing window) includes a plurality of candidate sensing sub-windows. The UE 1 may listen to a resource in each candidate sensing sub-window based on the resource pool. Optionally, the UE1 may select a partial sensing (partial sensing) sub-window in the plurality of candidate sensing sub-windows to perform actual listening, to obtain a listening result corresponding to the sensing window. The listening result includes resource occupation information of a resource in the sensing window. Optionally, a behavior that the UE 1 listens to, in the sensing window, a message sent by another device may also be expressed as receiving and detecting control information and/or a data packet sent by the another device. Optionally, for sidelink communication, the control information is sidelink control information (sidelink control information, SCI). Optionally, the UE 1 obtains, by detecting the SCI sent by the another device, an indicated time-frequency resource and a priority of a received service. The UE1 further determines, by using a value of a reference signal received power RSRP of the detected SCI (or a reference signal of the data packet indicated by the SCI), whether the detected resource is available for the UE1. Optionally, a unit of a resource occupied by the sensing window in time domain is a preset quantity of symbols (for example, 2 symbols, 4 symbols, 6 symbols, 10 symbols, 12 symbols, or 14 symbols), a slot, or a subframe; and a unit of a resource occupied by the sensing window in frequency domain is a resource block, a subchannel, or the like.

The resource selection window (or referred to as a selection window) (selection window) is determined by the UE 1 based on a delay requirement after the UE 1 detects that data arrives. Optionally, a unit of a resource occupied by the selection window in time domain is a preset quantity of symbols (for example, 2 symbols, 4 symbols, 6 symbols, 10 symbols, 12 symbols, or 14 symbols), a slot, or a subframe. A unit of the resource occupied by the sensing window in frequency domain is a resource block, a subchannel, or the like.

For a slot n in the present invention, when the UE 1 needs to transmit a V2X service, a higher layer of the UE 1 triggers, in the slot n shown in FIG. 1, a lower layer of the UE 1 to determine a resource. Afterwards, the UE 1 selects, based on a listening result of a listening resource in a range of a sensing window (for example, 1000 ms) before the slot n, an appropriate candidate resource from candidate resources in a range of a selection window after the slot n as a transmission resource. Optionally, the higher layer in this application is a MAC layer, an RLC layer, an RRC layer, or the like. When the higher layer is the MAC layer, the lower layer includes a physical layer. When the higher layer is the RLC layer or the RRC layer, the lower layer may include the MAC layer and/or a physical layer.

As shown in FIG. 1, the UE1 performs resource listening on a resource set in a range from $n-T_0$ to $n-T_{proc,0}$.

Therefore, the sensing window is a resource set $[n - T_0, n - T_{proc,0}^{SL})$ in the range from $n-T_0$ to $n-T_{proc,0}$. $T_0$, and $T_{proc,0}$ are parameters configured or predetermined by using signaling, and are greater than or equal to 0. Optionally, To represents a start time position or a size of the sensing window. Optionally, $T_{proc,0}$ represents how long before a moment n at which the data arrives, the data needs to be sensed. In addition, if the UE1 selects a resource from a resource set in a range from $n+T_1$ to $n+T_2$, the selection window is the resource set $[n + T_1, n + T_2]$ in the range from $n+T_1$ to $n+T_2$. n is the moment at which the data arrives. In other words, at the moment n, the UE1 detects to-be-transmitted data. A packet delay budget PDB (packet delay budget) is a delay required when the UE1 transmits data. In other words, the UE1 needs to transmit the data within time $T_{PDB}$. $T_1$ and $T_2$ are parameters configured or predetermined by using signaling, and are greater than or equal to 0. Optionally, $n+T_1$ represents a start time position of the resource selection window. $n+T_2$ represents an end time position of the resource selection window. Optionally, when the UE selects the resource, $n+T_1$ is usually not greater than $n+T_{Proc,1}$. Optionally, $T_{Proc,1}$ represents a processing time when resource selection starts, and is a constant not less than 0. Optionally, a value of $T_2$ is not greater than a value of the parameter $T_{PDB}$.

2. Candidate resource set, first candidate resource, and second candidate resource

The candidate resource (candidate resource) set is a resource set that is in the selection window and that can be used by the UE 1 to determine the transmission resource, that is, a set of candidate resources. As shown in FIG. 1, the candidate resource set is a set of time-frequency resources in a range of $n+T_{proc,1}$ to $n+T_{2min}$ in FIG. 1, or a set of time-frequency resources in a range $[n + T_1, n + T_2]$.

The first candidate resource is a first candidate resource corresponding to a candidate sensing sub-window in the candidate resource set, as shown in FIG. 1.

The second candidate resource is a resource other than the first candidate resource in the candidate resource set, that is, a resource other than the first candidate resource in the set of resources in the range from $n+T_{proc,1}$ to $n+T_{2min}$ or the range $[n + T_1, n + T_2]$ in FIG. 1.

As shown in FIG. 1, in partial sensing technologies of LTE-V2X communication, because a supported service type is a periodic service, and a service period (that is, a resource reservation period) is a multiple of 100 milliseconds (ms), when $P_{step}$ is a specified value (for example, 100 ms), a sensing requirement for the periodic service can be met.

The following uses that $P_{step}$ is 100 ms as an example to describe the partial sensing technologies As shown in FIG. 1, the UE 1 may select the listening resource from the candidate listening resources, and listen to the listening resource, to learn a status that a resource in the resource pool is occupied by another service.

A listening interval between two adjacent candidate listening resources is $P_{step}$. The network device may indicate an index of a listening resource in a plurality of candidate listening resources. The UE 1 determines the listening resource in the candidate listening resources based on the index. Optionally, the candidate resource may be represented by using a formula $y - k \times P_{step}$. k is a positive integer (for example, k=1, or k=1, 2, ..., M. M is a positive integer greater than 1, for example, M=10). y is a slot number of the candidate resource. Optionally, y and $P_{step}$ may be physical slots, or may be logical slots. When the UE 1 needs to transmit the V2X service, the higher layer of the UE 1 triggers, in the slot n shown in FIG. 1, the lower layer of the UE 1 to determine the resource. Afterwards, the UE 1 selects, based on the listening result of the listening resource in the range of the sensing window (for example, 1000 ms) before the slot n, the appropriate candidate resource from the candidate resources in the range of the selection window after the slot n as a transmission resource. For example, a candidate resource that is not occupied by another service is selected as the transmission resource, or a resource (for example, a slot and/or a subchannel) whose detected RSRP value is less than a preset threshold is selected. The resource selection window is shown as a time domain position between $[n+T_1, n+T_2]$ in FIG. 1, and $T_1$ and $T_2$ are values configured by using signaling or predefined. Optionally, a value of $T_1$ may be 0. Optionally, a value of $T_2$ is not less than the value of $T_1$. The candidate resource includes at least Y consecutive slots, and Y is a preconfigured value or a value configured by using signaling. It should be understood that signaling configuration in this application includes: signaling configuration performed by the network device by using signaling in V2X communication in which the network device participates, and signaling configuration performed by using signaling in V2X communication in which no network device participates.

The higher layer in this application is the MAC layer, the RLC layer, the RRC layer, or the like. When the higher layer is the MAC layer, the lower layer includes the physical layer. When the higher layer is the RLC layer or the RRC layer, the lower layer may include the MAC layer and/or the physical layer.

In addition, as shown in FIG. 1, the UE1 performs resource listening on the resource set in the range from $n-T_0$ to $n-T_{proc,0}$. Therefore, the sensing window is the resource set $[n - T_0, n - T_{proc,0}^{SL})$ in the range from $n-T_0$ to $n-T_{proc,0}$. $T_0$ and $T_{proc,0}$ are parameters configured or predetermined by using signaling, and are greater than or equal to 0. Optionally, $T_0$ represents the start time position or the size of the sensing window. Optionally, $T_{proc,0}$ represents how long before the moment n at which the data arrives, the data needs to be sensed. In addition, the UE1 selects the resource from the resource set in the range from $n+T_1$ to $n+T_2$. The selection window is the resource set $[n + T_1, n + T_2]$ in the range from $n+T_1$ to $n+T_2$. n is the moment at which the data arrives. In other words, at the moment n, the UE1 detects the to-be-transmitted data. The packet delay budget PDB (packet delay budget) is the delay required when the UE1 transmits the data. In other words, the UE1 needs to transmit the data within the time $T_{PDB}$. $T_1$ and $T_2$ are parameters configured or predetermined by using signaling, and are greater than or equal to 0. Optionally, $n+T_1$ represents the start time position of the resource selection window. $n+T_2$ represents the end time position of the resource selection window. Optionally, when the UE selects the resource, $n+T_1$ is usually not greater than $n+T_{Proc,1}$. Optionally, $T_{Proc,1}$ represents the processing time when resource selection starts, and is a constant not less than 0. Optionally, the value of $T_2$ is not greater than the value of the parameter $T_{PDB}$.

However, NR-V2X further supports an aperiodic service. In other words, a resource reservation period supported by NR-V2X is no longer only an integer multiple of a specified value (for example, 100 or another value). If equal-interval listening is still performed in NR-V2X based on the specified value, all V2X service periods may not be covered, and a resource occupation status in a candidate resource cannot be accurately sensed. Therefore, in NR-V2X, partial sensing technologies for listening to a resource based on a fixed step are no longer applicable, and need to be improved.

To optimize a partial sensing solution in NR-V2X and improve reliability of partial sensing, an embodiment of this application provides a transmission resource determining method. The method may be implemented by a terminal device (or a component in the terminal device) and a network device (or a component in the network device). The terminal device includes the UE 1 and/or the UE 2 shown in FIG. 2 and/or FIG. 3. Optionally, the terminal device may include the structure shown in FIG. 4 or FIG. 5. The network device may include the structure shown in FIG. 6 or FIG. 7. It should be understood that the transceiver module 420 shown in FIG. 4 or the transceiver unit 510 shown in FIG. 5 may perform receiving and/or sending actions performed by the terminal device in this embodiment of this application. The processing module 410 shown in FIG. 4 or the processing unit 520 shown in FIG. 5 may perform other actions than receiving and/or sending performed by the terminal device in this embodiment of this application. In addition, the transceiver module 620 shown in FIG. 6 or the transceiver unit 710 shown in FIG. 7 may perform receiving and/or sending actions performed by the network device in this embodiment of this application. The processing module 610 shown in FIG. 6 or the processing unit 720 shown in FIG. 7 may perform other actions than receiving and/or sending performed by the network device in this embodiment of this application.

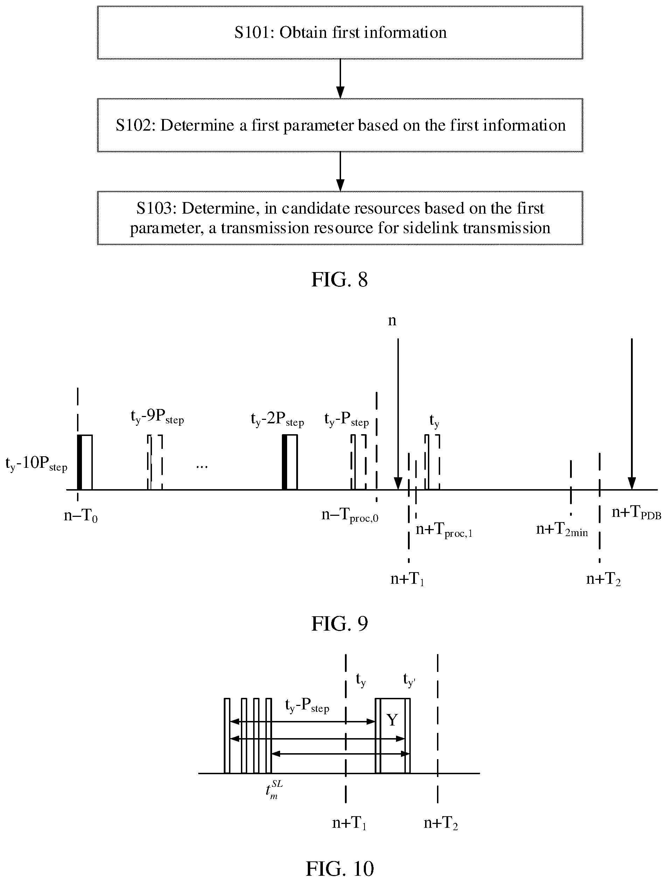

As shown in FIG. 8, the transmission resource determining method includes the following steps.

S101: A terminal device obtains first information.

The first information includes at least one of a size of a resource selection window, a size of a sensing window, or a resource reservation period.

Optionally, the first information may be configured by using signaling or predefined.

S102: The terminal device obtains a first parameter based on the first information.

The first parameter includes an interval between candidate listening resources and/or a quantity of candidate resources. The candidate resources are within the resource selection window.

S103: The terminal device determines, in the candidate resources based on the first parameter, a transmission resource for sidelink transmission.

For example, UE 1 is used as an example. When a higher layer of the UE 1 triggers, in the slot n shown in FIG. 1 (that is, a moment at which the terminal device is triggered to determine the transmission resource, which may be referred to as a first time domain position below), a lower layer of the UE 1 to determine a resource, the UE 1 may determine, based on the first parameter, the transmission resource in the candidate resource in a resource selection window after the slot n.

According to the foregoing method, the interval between the candidate listening resources and/or the quantity of candidate resources may be determined based on at least one of the size of the resource selection window, the size of the sensing window, or the resource reservation period. The transmission resource is further determined in the candidate resources based on the interval between the candidate listening resources and/or the quantity of candidate resources. This provides a resource transmission method applicable to an NR-V2X scenario, and improves resource selection reliability.

The following describes content that may be included in the first information.

A size (size) of the resource selection window (resource selection window) is a time domain length of the resource selection window, and a unit is ms, a slot, a subframe, or a preset quantity of symbols. For example, the size of the resource selection window may be represented as $T_{scal}$, $T_{scal} = T2 - T_1$, or $T_{scal} = T2$. Optionally, a value of $T_{scal}$ may alternatively be configured by using signaling or predefined, or a maximum value or a minimum value of $T_{scal}$ may alternatively be configured by using signaling or predefined. Optionally, as shown in FIG. 1, $(n+T_1)$ is a start position of the resource selection window, and $(n+T_2)$ is an end position of the resource selection window. In other words, $T_1$ is duration between the start position of the resource selection window and the slot n (or time corresponding to the slot n), and $T_2$ is duration between the end position of the resource selection window and the slot n (or the time corresponding to the slot n). $T_1$ and/or $T_2$ may be determined by the terminal device or indicated by using signaling.

A size of the sensing window (sensing window) is a time domain length of the sensing window, and a unit is ms, a slot, a subframe, or a preset quantity of symbols. Optionally, the size of the sensing window in the NE-V2X may have a plurality of values. For example, the length of the sensing window may be a first value (for example, 100 ms or another value) or a second value (for example, 1100 ms or another value). A size of the sensing window may be configured by using signaling or predefined.

The resource reservation period may also be referred to as a reservation period, and is a time domain interval between next transmission reserved by a V2X service and current transmission. A unit is ms, a slot, a subframe, or a preset quantity of symbols. Resource reservation periods of different V2X services may be different. Further, optionally, the reservation period may be defined on a physical time domain resource or a logical time domain resource. The logical time domain resource is a time domain resource obtained by repeatedly numbering, in a resource pool for sidelink communication, a set of time domain resources that can be used for sidelink communication and that are indicated by using signaling. For example, on consecutive physical resources of 100 slots, if only even slots are used for sidelink transmission, there are a total of 50 logical slots in corresponding 100 physical slots. For example, the slot may be a physical slot, or may be a logical slot. The resource reservation period may be configured by using signaling or predefined. For example, the resource reservation period is any value in {0, 1, 99, 100, 200, ..., 1000} ms. Optionally, a subset of the foregoing possible reservation period values may be configured by using signaling. For example, 4, 8, 16, or 32 are configured in the foregoing set. This is not limited in the present invention. Optionally, the configured resource reservation period may be a multiple of 100 ms and does not exceed 1000 ms, or the resource reservation period may be any value from 0 ms to 99 ms. Optionally, the resource reservation period may be configured by a base station, and/or indicated by the terminal device in sidelink control information (sidelink control information, SCI) based on a value configured by using signaling. It can be learned that the resource reservation period of the V2X service in NR-V2X is flexible and variable. Therefore, a period of the supported V2X service is also flexible and variable. Both a periodic service and an aperiodic service are supported.

It should be understood that the first information may include one or more of the size of the resource selection window, the size of the sensing window, or the resource reservation period. This is specifically described in the following embodiments.

The following describes content that may be included in the first parameter.

The interval between the candidate listening resources is a time domain interval between two adjacent candidate listening resources, and a unit is ms, a slot, a subframe, or a preset quantity of symbols. In LTE-V2X, an interval between subsequent listening resources is a fixed value (for example, 100 ms). The fixed value is irrelevant to any one or a combination of the size of the resource selection window, the size of the sensing window, or the resource reservation period. In this application, after the interval between the candidate listening resources is determined based on the solution shown in FIG. 8, the candidate listening resources may be determined based on the interval, and then a listening resource that needs to be listened to is selected from a plurality of candidate listening resources based on a signaling-configured listening resource indication or a predefined listening resource indication. As shown in FIG. 9, a listening resource ($t_y$-$2P_{step}$ and $t_y$-$10P_{step}$ shown in FIG. 9) actually listened to by the terminal device is some resources in the candidate listening resources ($t_y$-$P_{step}$, $t_y$-$2P_{step}$, ..., $t_y$-$9P_{step}$, and $t_y$-$10P_{step}$ shown in FIG. 9). The candidate listening resource may be indicated by using a bitmap (bitmap) or in another manner. This is not specifically limited herein.

A quantity of candidate resources may also be replaced with a quantity of time units included in the candidate resources, and is represented as Y A time unit is, for example, a slot, a subframe, or a preset quantity of symbols. After the quantity Y of the candidate resources is determined based on the solution shown in FIG. 4, the transmission resource may be determined from the Y slots in the resource selection window based on a sensing, detection, or listening status.

The following describes, by using an example in which the first parameter is an interval between the candidate listening resources (referred to as an interval, represented as **$P_{step}$**), a method for obtaining the interval based on the first information in S102 by using an embodiment.

Method 1: The first information includes the size of the resource selection window, and the terminal device may determine the interval based on the size of the resource selection window.

The interval **$P_{step}$** and the size of the resource selection window $T_{scal}$ meet:

$$\mathbf{P_{step}} = \left\lceil \frac{N}{M} \cdot \boldsymbol{T}_{scal} \right\rceil, \ \mathbf{P_{step}} = \boldsymbol{floor}\left\{\frac{N}{M} \cdot \boldsymbol{T}_{scal}\right\}, \text{ or } \mathbf{P_{step}} = \frac{N}{M} \cdot \boldsymbol{T}_{scal}; \text{(formula 1)}$$

N is a quantity of time units used for sidelink transmission in first duration. A length of the first duration is M slots, subframes, a quantity of predesigned symbols, or M ms. M and N are positive integers. $\lceil \ \rceil$ represents rounding up. *floor*{ } represents rounding down.

For example, N is a quantity of slots that can be used for sidelink transmission in the M slots or duration. M is, for example, 10 slots, 10 ms, 20 slots, or 20 ms. Values of M and N may be configured by using signaling or predefined.

For example, M is 20 ms, and the foregoing formula 1 may be transformed into:

$$P_{step} = \left\lceil \frac{N}{20 \ ms} \times T_{scal} \right\rceil;$$

$$P_{step} = \left\lceil \frac{N}{20 \ ms} \times T_2 \right\rceil;$$

$$P_{step} = \left\lceil \frac{N}{20 \ ms} \times (T_2 - T_1) \right\rceil;$$

or

$$\mathbf{P_{step}} = \frac{N}{20ms} \cdot \boldsymbol{T}_{scal}.$$

According to method 1, the interval is the size of the resource selection window, and resources in all resource selection windows may be detected based on the interval. This reduces a probability of missing detection.

Method 2: The first information includes the size of the sensing window, and the terminal device may determine the interval based on the size of the sensing window.

In a manner of determining the interval based on the size of the sensing window, the terminal device may determine, based on the size of the sensing window, that the interval corresponding to the size of the sensing window is the interval between the candidate listening resources.

When the size of the sensing window is a first value (for example, 100 ms), the interval may be an interval (for example, 10 ms, or another value) corresponding to the first value. When the size of the sensing window is a second value (for example, 1100 ms), the interval may be an interval (for example, 100 ms, or another value) corresponding to the second value.

The terminal device may determine, based on a first correspondence, the interval corresponding to the size of the sensing window. The first correspondence may be a correspondence between a size of at least one sensing window and at least one interval. The first correspondence may be configured by using signaling or predefined. For example, a correspondence or an association relationship between a parameter of the size of the sensing window and a parameter of the interval may be indicated by using configuration information of same signaling (or a same field in the signaling, or a same message body, or a same resource pool).

Optionally, for example, a value of the size of the sensing window and/or a value of a size of the interval may be configured by using the signaling. Further, optionally, a protocol may define, specify, or agree that when the size of the sensing window is a relatively small first value, a corresponding interval is a first interval value; and/or when the size of the sensing window is a relatively large second value, a corresponding interval is a second interval value. For example, when the size of the sensing window configured by using the signaling is 100 ms, a corresponding interval is the first interval value. When the size of the sensing window configured by using the signaling is 1100 ms, a corresponding interval is the second interval value. Optionally, the first interval value may be a value less than 100 ms, for example, 5, 10, 20, or 50 ms.

In another manner of determining the interval based on the size of the sensing window, a first function f(x) is met between the size $P_T$ of the sensing window and the interval $\mathbf{P_{step}}$, that is, $\mathbf{P_{step}} = \mathbf{\mathit{f}}(P_T)$.

Optionally, the size of the sensing window $P_T$ and the interval $\mathbf{P_{step}}$ meet the following condition:

$$\mathrm{P_{step}} = \frac{P_T}{L};$$

$$\mathrm{P_{step}} = \left\lceil \frac{P_T}{L} \right\rceil;$$

or

$$\mathrm{P_{step}} = floor\{\frac{P_T}{L}\}.$$

L is a specified value, or a value configured by using signaling. L is a positive integer. $\lceil \ \rceil$ represents rounding up. *floor*{ } represents rounding down.

According to the foregoing method 2, a size of one sensing window may be associated with one $\mathbf{P_{step}}$. In other words, one $\mathbf{P_{step}}$ may be determined based on the size of one sensing window. Different sizes of sensing windows may be statically configured for the terminal device. Generally, the size of only one sensing window appears at a moment, and therefore there is only one $\mathbf{P_{step}}$ at the moment.

Method 3: The first information includes the resource reservation period, and the terminal device may determine the interval based on the resource reservation period.

Optionally, in a manner of determining the interval based on the resource reservation period, the terminal device may determine that an interval corresponding to the resource reservation period is the interval.

The terminal device may determine, based on a second correspondence, the interval corresponding to the resource reservation period. The second correspondence may be a correspondence between at least one resource reservation period and at least one interval. The second correspondence may be configured by using signaling or predefined. For example, a correspondence or an association relationship between a parameter of the resource reservation period and a parameter of the interval may be indicated by using configuration information of same signaling (or a same field in the signaling, or a same message body, or a same resource pool).

Optionally, for example, values of the resource reservation period and/or the size of the interval may be configured by using signaling. Further, optionally, a protocol may define, specify, or agree that when the resource reservation period is a relatively small first value, a corresponding interval is a first interval value; and/or when the resource reservation period is a relatively large second value, a corresponding interval is a second interval value. For example, when the resource reservation period is configured by using the signaling is 10 ms (or another value less than 100 ms), a corresponding interval is the first interval value. When the resource reservation period configured by using the signaling is 100 ms (or another value greater than 100 ms), a corresponding interval is the second interval value. Optionally, the first interval value may be less than 100 ms, for example, 5, 10, 20, or 50 ms.

In another manner of determining the interval based on the resource reservation period, a resource reservation period set may be configured by using signaling, and the set may include at least one period. The terminal device may determine the interval between the candidate listening resources based on the configured resource reservation period set.

Optionally, the terminal device may determine the interval between the candidate listening resources based on a value relationship between the resource reservation period configured by the network device and a specified time length. The specified time length is, for example, 100 ms, 200 ms, or another value. For example, when a configured reservation period is 100 ms or all or some values of {200, 300, ..., 1000} ms, the interval between the candidate listening resources may be 100. For another example, when the configured reservation period is all or some values of {0, 1, 2, 3, ..., 99} ms, the interval between the candidate listening resources may be an integer less than 100 ms. Optionally, the integer value less than 100 ms may be configured by using signaling, preconfigured or predefined. Optionally, when the configured reservation period includes both a value that is an integer multiple of 100 and a value within 100, the interval between the candidate listening resources may be a value less than 100, or may be configured by using signaling, or may be a preconfigured or predefined value.

Optionally, the interval may be a maximum value or a minimum value between a least common multiple min_P and Pt of some or all resource reservation periods in the resource reservation period set. Pt is configured by using signaling, preconfigured, or predefined. For example, Pt is one of 10 ms, 5 ms, 20 ms, 50 ms, and 100 ms.

In other words, the interval $P_{step}$ and a least common multiple of some or all of the resource reservation periods meet the following condition:

$$\mathbf{P_{step}} = \max\{\text{min\_P}, \text{Pt}\}; \text{(formula 2)}$$

$$\mathbf{P_{step}} = \min\{\text{min\_P}, \text{Pt}\}; \text{(formula 3)}$$

max{a b} indicates that a maximum value between a and b is selected, and min{a, b} indicates that a minimum value between a and b is selected.

Optionally, the interval may be a maximum value or a minimum value between a maximum common divisor max_P and Pt of some or all resource reservation periods in the resource reservation period set. Pt is configured by using signaling, preconfigured, or predefined. For example, Pt is one of 10 ms, 5 ms, 20 ms, 50 ms, and 100 ms.

In other words, the interval $P_{step}$ and a least common multiple of some or all of the resource reservation periods meet the following condition:

$$\mathbf{P_{step}} = \max\{\text{max\_P}, \text{Pt}\}; \text{(formula 2)}$$

$$\mathbf{P_{step}} = \min\{\text{max\_P}, \text{Pt}\}; \text{(formula 3)}$$

max{a b} indicates that a maximum value between a and b is selected, and min{a, b} indicates that a minimum value between a and b is selected.

Optionally, the interval may be a maximum or minimum resource reservation period in the resource reservation period set.

In an implementation of method 3, the terminal device may group the configured resource reservation periods. For example, resource reservation periods greater than or equal to a specified time length are grouped into a first group, and periods less than the specified time length are grouped into a second group. For a resource reservation period in the first group, the terminal device may determine, based on the second correspondence, an interval between candidate listening positions corresponding to the resource reservation period. For example, in the second correspondence, the interval corresponding to the resource reservation period may be 100 ms, 200 ms, a specified time interval, or another value. For a resource reservation period in the second group, the terminal device may determine an interval between candidate listening positions based on a resource reservation period set to which the resource reservation period in the second group belongs. For example, the interval between the candidate listening positions is determined based on a least common multiple of some or all resource reservation periods in a resource reservation period set to which the resource reservation period belongs, or a maximum or minimum resource reservation period in the resource reservation period set is used as the interval between the candidate listening positions.

In addition, for the second group of resource reservation periods, the interval between the candidate listening positions may also be determined based on the second correspondence. In the second correspondence, the interval corresponding to the second group of resource reservation period is less than the interval corresponding to the first group of resource reservation period. Alternatively, an interval corresponding to the second group of resource reservation periods may be configured by using signaling, and the interval is less than the interval of the first group of resource reservation periods.

It should be understood that method 1 to method 3 may be examples of determining the interval between the candidate listening resources. In actual use, any two or more of method 1 to method 3 may be combined for implementation. For example, method 2 may be combined with method 3. When the size of the sensing window configured in method 2 is 1100 ms, an interval value determined or configured based on the reservation period in method 3 is a first value; and when the sensing window size configured in method 2 is 100 ms, an interval value determined or configured based on the reservation period is a second value. For another example, according to reservation period values within 100 ms and greater than 100 ms configured in method 3, different PT values may be configured or determined for sensing periods of 1100 ms and 100 ms in method 2.

Optionally, in the foregoing first parameter, the interval may be represented by using interval coefficients $\alpha$ and $P_{step}$. $\alpha$ is determined based on the first information. $P_{step}$ is a value configured by using signaling or predefined, for example, 10, ms, 20 ms, 100 ms, 200 ms, or another value. However, for different sizes of sensing windows or reservation periods, $\alpha$ have different values. For a manner of determining $\alpha$, refer to the description of determining the interval between the candidate listening positions in method 1 to method 3. For example, when the size of the sensing window is 1100 ms, $\alpha = 1$; or when the size of the sensing window is 100 ms, $\alpha = 0.1$ or $\alpha = 0.1$.

In this case, when the transmission resource is determined based on the interval, a logical slot position of the transmission resource may be represented as $y - k * \alpha * P_{step}$, where y is a slot in which the candidate resource is located.

When the first parameter includes a quantity of candidate resources, the terminal device may determine, based on the first information, the quantity of candidate resources corresponding to the first information. The first information is, for example, one of the size of the resource selection window, the size of the sensing window, or the resource reservation period.

For example, the terminal device may determine, based on a third correspondence, the quantity of candidate resources corresponding to the first information. The third correspondence may include a correspondence between the quantity of candidate resources and one of the size of the resource selection window, the size of a sensing window, or the resource reservation period. The third correspondence may be configured by using signaling or predefined.

Using the size of the sensing window as an example, the terminal device may determine, based on the third correspondence, the quantity of candidate resources corresponding to the size of the sensing window.

In implementation, the third correspondence may be configured by using signaling (for example, a radio resource control (radio resource control, RRC) message or a system information block (system information block, SIB)). Herein, several possible indication manners of the third correspondence are used as examples.

First indication manner: The signaling carries {a size 1 of the sensing window, indication information 1 of a listening position in candidate listening positions, and indication information 1 of a quantity Y of candidate resources}. The size 1 of the sensing window, the indication information 1 of the listening position in the candidate listening positions, and the indication information 1 of the quantity Y of the candidate resources correspond to each other.

Alternatively, the signaling carries {a size 2 of the sensing window, indication information 2 of a listening position in candidate listening positions, and indication information 2 of a quantity Y of candidate resources}. The size 2 of the sensing window, the indication information 2 of the listening position in the candidate listening positions, and the indication information 2 of the quantity Y of the candidate resources correspond to each other.

Second indication manner: The signaling carries {indication information 3 of a listening position in candidate listening positions and indication information 3 of a quantity Y of candidate resources}. The indication information 3 of the listening position in the candidate listening positions and the indication information 3 of the quantity Y of the candidate resources correspond to each other.

It should be understood that the foregoing several indication manners may be implemented separately, or may be implemented in combination with each other. When a configured size of the sensing window is the size 1 of the sensing window or the size 2 of the sensing window, the terminal device may determine that the quantity of candidate resources is a quantity of candidate resources corresponding to the size 1 of the sensing window or the size 2 of the sensing window. In addition, if the signaling configures the indication information of the listening location in the candidate listening location, for example, one of the indication information 1 of the listening location in the candidate listening locations, the indication information 2 of the listening location in the candidate listening locations, or the indication information 3 of the listening location in the candidate listening locations, the terminal device may determine that the quantity of candidate resources is the quantity of candidate resources corresponding to the indication information 1 of the listening position in the candidate listening positions, the indication information 2 of the listening position in the candidate listening positions, or the indication information 3 of the listening position in the candidate listening positions.

Optionally, in this application, a distance between the candidate resource and the candidate listening resource may be further limited, to prevent the terminal device from performing blind detection in an excessively large range. FIG. 10 is used as an example for description below.

As shown in FIG. 10, a last slot in the candidate resource may be represented as y, and an interval between y and a slot m on the candidate listening resource may be set to be less than or equal to a second parameter. m is a slot $t_m^{SL}$ (the UE receives an SCI format 1-A in slot $t_m^{SL}$) in which the UE is located when the UE receives the SCI in the sensing window. Herein, $t_m^{SL}$ is a physical slot $t_m^{SL}$ in which the logical slot m is located. $t_{y'}^{SL}$ refers to the last slot in the Y slots. Here, $t_{y'}^{SL}$ is the physical slot $t_{y'}^{SL}$ where the logical slot y' is located. It should be understood that the slot y and the slot m are physical slots or logical slots in a resource pool.

The second parameter may be represented as one of the following:

$$P'_{rsvp\_RX} + P'_{T_{scal}};$$

$$P'_{rsvp\_RX} + Y;$$

$$P'_{rsvp\_RX} + P_{step};$$

or

$$P_{step} + Y.$$

$P'_{rsvp\_RX} + P_{step}$ represents a quantity of logical slots in the resource reservation period, and the quantity of the logical slots may be configured by using signaling. $P'_{T_{scal}}$ represents a quantity of logical slots in the resource selection window.

$P'_{T_{scal}} = \left\lceil \frac{N}{20 \text{ ms}} \times T_{scal} \right\rceil$. $T_{scal}$ is $T_2$ or $T_2$-$T_1$.

n+$T_2$ is an end position of the resource selection window.

In another representation, the second parameter may be represented as a maximum time domain interval between the logical slot y' and the slot m. In other words, the logical slot y' and the slot m meet:

$$y' - m \le P'_{rsvp\_RX} + P'_{T_{scal}};$$

$$y' - m \le P'_{rsvp\_RX} + Y;$$

or $y' - m \le P'_{rsvp\_RX} + P_{step}$. $P_{step}$ may be any $P_{step}$ determined based on the method provided in embodiments of this application; or

$$y' - m \le P_{step} + Y.$$

Alternatively, the logical slot y' and the slot m meet:

$$y' - m \le P_{step} \cdot P'_{rsvp\_RX} + P'_{T_{scal}};$$

$$y' - m \le P_{step} \cdot P'_{rsvp\_RX} + Y;$$

or $y' - m \le P_{step} \cdot P'_{rsvp\_RX} + P_{step}$. $P_{step}$ may be any $P_{step}$ determined based on the method provided in embodiments of this application; or

$$y' - m \leq P_{step} \cdot P_{step} + Y.$$

Optionally, when $P_{rsvp\_RX} < T_{scal}$, the interval between y and the slot m on the candidate listening resource may be set to be less than or equal to the second parameter. In other words, when $P_{rsvp\_RX} < T_{scal}$, the logical slot y' and the slot m meet the foregoing condition.

In the foregoing manner, an interval between the slot position $t_m^{SL}$ and the slot position $t_{y'}^{SL}$ of the candidate resource in Y may be limited, to reduce unnecessary blind detection positions.

It should be understood that in this application, the terminal device is supported in determining the interval between candidate listening resources based on the configured resource reservation period, and determining the size and the time domain position of the sensing window based on the determined interval.

Optionally, when the first parameter includes the first interval between the candidate listening resources, and the first interval is determined based on a resource reservation period that is not less than a specified time length, the terminal device may obtain second information. The second information indicates a first sensing window. A size of the first sensing window is determined based on the first interval. A first time window is before a first time domain position. The first time domain position is a moment at which the terminal device is triggered to determine the transmission resource.

Optionally, the first parameter further includes a third interval between the candidate listening resources. The terminal device may obtain third information. The third information indicates a second sensing window. A size of the second sensing window is determined based on the third interval. The second sensing window is located after the first time domain position. The first time domain position is a moment at which the terminal device is triggered to determine the transmission resource.

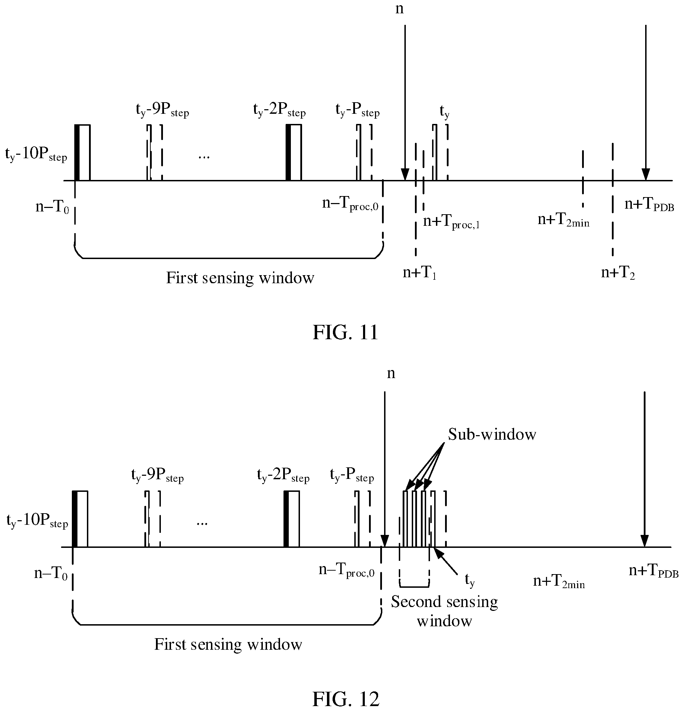

For a manner of determining the interval between the candidate listening resources based on the configured resource reservation period, refer to the foregoing description. After determining the interval, the terminal device may determine, based on a correspondence configured by using signaling or predefined between the interval and the size of the sensing window, that is, the first correspondence, a size Tm1 of the sensing window corresponding to the interval. A location of the sensing window may be determined based on a time domain position of a slot n. For example, as shown in FIG. 11, the sensing window is located before the slot n, and a time domain length included in the sensing window is Tm1.

Optionally, after the slot n, the terminal device may further perform listening on at least one listening resource, to avoid interference caused by resources of a relatively short-period service and an aperiodic service to a V2X service of the terminal device, improve transmission resource obtaining effectiveness, and improve transmission performance.

After the slot n and before the candidate resource, there is at least one discrete listening resource (or referred to as a sub-window). There may be one sub-window. When there are a plurality of sub-windows, an interval value (that is, the third interval) $P_{step2}$ between the plurality of sub-windows may be configured by using signaling, predefined, or determined based on a configured resource reservation period and/or a size of a sensing window. For a specific determining manner, refer to the foregoing description of determining the interval between the candidate listening resources based on the resource reservation period and/or the size of the sensing window.

Optionally, the first sensing window before the slot n and the second sensing window after the slot n may be configured by using signaling, predefined, or specified in a protocol. Optionally, the size of the second sensing window is not greater than that of the first sensing window (for example, 100 ms or 50 ms).

Optionally, when the configured size of the first sensing window is a first preset value (for example, 1100 ms), the second sensing window with the first value is included. Optionally, when the configured size of the first sensing window is a preset second value (for example, 100 ms), the second sensing window (for example, 20 ms, 10 ms, or 5 ms) with the second value is included.

Optionally, when the configured resource reservation period has both a period greater than or equal to Pt and a period less than Pt, the first sensing window before the slot n and the second sensing window after the slot n may be configured by using signaling, predefined, or specified in a protocol. Optionally, Pt is configured by using signaling or predefined, for example, one of 100 ms, 20 ms, 10 ms, and 50 ms.

Optionally, the terminal device selects the transmission resource from the candidate resource based on a listening result of the first sensing window and/or the second sensing window.

Optionally, the first sensing window is a sensing window corresponding to $P_{step}$ determined based on a resource reservation period greater than or equal to a specified time length. The second sensing window is a sensing window corresponding to $P_{step}$ (or may be replaced with $P_{step2}$) determined based on a resource reservation period shorter than the specified time length. Optionally, for a manner of determining based on the resource reservation period, refer to the foregoing description. A correspondence between and the size of the sensing window may meet the foregoing first correspondence.

For example, as shown in FIG. 12, that the specified time length is 100 ms is used as an example. When the configured resource reservation period has both a period greater than or equal to 100 ms and a period less than 100 ms, the first sensing window before the slot n and the second sensing window after the slot n may be further configured by using signaling. The terminal device selects the transmission resource in the candidate resource based on a listening result of the first sensing window and/or a listening result of the second sensing window. The first sensing window is a sensing window corresponding to $P_{step}$ determined based on the resource reservation period greater than or equal to the specified time length. The second sensing window is a sensing window corresponding to $P_{step}$ determined based on the resource reservation period shorter than the specified time length. For a manner of determining $P_{step}$ based on the resource reservation period, refer to the foregoing descriptions. A correspondence between $P_{step}$ and the size of the sensing window may meet the foregoing first correspondence. Partial sensing is performed based on the two sensing windows, so that the terminal device can more properly select an occupied resource for V2X transmission of the terminal device. Therefore, V2X transmission performance can be improved.

Further optionally, when the sensing window is configured to be 100 ms, a sensing window corresponding to $P_{step}$ determined based on a resource reservation period less than 100 ms needs to be configured at least after the slot n.

In addition, an embodiment of this application further provides another transmission resource determining method. A terminal device obtains a first parameter, and the first parameter may include an interval between candidate listening resources and/or a quantity of candidate resources. The first parameter is determined by a network device based on first information. The first information may include at least one of a size of a resource selection window, a size of a sensing window, or a resource reservation period. For a manner of determining the first parameter by the network device based on the first information, refer to the description of determining the first parameter by the terminal device based on the first information in this application. Details are not described herein again. For example, an execution body for determining the first parameter based on the first information is replaced with the network device, so that the method for determining the first parameter by the network device based on the first information can be obtained.

An embodiment of this application provides a communication apparatus. The communication apparatus may be configured to implement the terminal device in the foregoing embodiments. The communication apparatus may include the structure shown in FIG. 4 and/or FIG. 5.

An embodiment of this application provides a communication apparatus. The communication apparatus may be configured to implement the network device in the foregoing embodiments. The communication apparatus may include the structure shown in FIG. 6 and/or FIG. 7.

An embodiment of this application provides a communication system. The communication system may include the terminal device in the foregoing embodiments and the network device in the foregoing embodiments. Optionally, the terminal device and the network device in the communication system may perform the method shown in any one of the foregoing method embodiments.

An embodiment of this application further provides a computer-readable storage medium. The computer-readable storage medium stores a computer program. When the computer program is executed by a computer, the computer may implement a procedure related to the terminal device or the network device in any one of the foregoing method embodiments.

An embodiment of this application further provides a computer program product. The computer program product is configured to store a computer program. When the computer program is executed by a computer, the computer may implement a procedure related to the terminal device or the network device in any one of the foregoing method embodiments.

An embodiment of this application further provides a chip or a chip system. The chip may include a processor. The processor may be configured to invoke a program or instructions in a memory, to perform a procedure related to the terminal device or the network device in any one of the foregoing method embodiments. The chip system may include the chip, and may further include another component such as the memory or a transceiver.

An embodiment of this application further provides a circuit. The circuit may be coupled to a memory, and may be configured to perform a procedure related to the terminal device or the network device in any embodiment shown in the foregoing method embodiments. The chip system may include the chip, and may further include another component such as the memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed method and apparatus may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network elements. Some or all of the units may be selected based on actual requirements to achieve the objectives of the solutions of embodiments.

In addition, functional modules in this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the essence of the technical solutions of this application, or the contribution part or the part of the technical solutions may be embodied in a form of a software product. The computer software product is stored in a storage medium and includes several instructions for indicating a computer device (which may be a personal computer, a server, or a network device) to perform all or some of the steps of the methods in the embodiments of this application. The foregoing computer-readable storage medium may be any usable medium that can be accessed by a computer. By way of example but not limitation, the computer-readable medium may include a random access memory (random access memory, RAM), a read-only memory (read-only memory, ROM), an electrically erasable programmable read only memory (electrically erasable programmable read only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be for carrying or storing expected program code in a form of instructions or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of the embodiments of this application. Therefore, the protection scope of embodiments of this application should be subject to the protection scope of the claims.

**Claims**

1. A transmission resource determining method, comprising:

   obtaining first information, wherein the first information comprises at least one of a size of a resource selection window, a size of a sensing window, or a resource reservation period;
   obtaining a first parameter based on the first information, wherein the first parameter comprises an interval between candidate listening resources and/or a quantity of candidate resources, and the candidate resources are within the resource selection window; and
   determining, in the candidate resources based on the first parameter, a transmission resource for sidelink transmission.

2. The method according to claim 1, wherein the first information comprises the size of the resource selection window, the first parameter comprises the interval, and the interval and the size of the resource selection window meet:

$$P_{step} = \left\lceil \frac{N}{M} \cdot T_{scal} \right\rceil, \; P_{step} = floor\left\{ \frac{N}{M} \cdot T_{scal} \right\}, \text{ or } P_{step} = \frac{N}{M} \cdot T_{scal},$$

   wherein

   $P_{step}$ is the interval;
   N is a quantity of time units used for sidelink transmission in first duration, a length of the first duration is M slots or M milliseconds, M and N are positive integers, $\lceil \; \rceil$ represents rounding up, and ***floor{ }*** represents rounding down; and
   $T_{scal}$ is the size of the resource selection window.

3. The method according to claim 1, wherein the first information comprises the size of the sensing window, the first parameter comprises the interval, and the obtaining a first parameter based on the first information comprises:

   determining, based on the size of the sensing window, the interval corresponding to the size of the sensing window; or
   determining, based on the size of the sensing window, the interval that meets a first function relationship with the size of the sensing window.

4. The method according to claim 3, further comprising:
   obtaining a first correspondence, wherein the first correspondence is a correspondence between a size of at least one sensing window and at least one interval, the size of the at least one sensing window comprises the size of the sensing window, and the at least one interval comprises the interval.

5. The method according to claim 3, wherein the first function relationship between the size of the sensing window and the interval comprises:

$$P_{step} = \frac{P_T}{L}, \; P_{step} = \left\lceil \frac{P_T}{L} \right\rceil, \text{ or } P_{step} = floor\left\{ \frac{P_T}{L} \right\},$$

   wherein
   $P_{step}$ is the interval, $P_T$ is the size of the sensing window, L is a specified value, or L is indicated by a network device, and L is a positive integer.

6. The method according to claim 1, wherein the first information comprises the resource reservation period, the first parameter comprises the interval, and the obtaining a first parameter based on the first information comprises:
   determining the interval corresponding to the resource reservation period.

7. The method according to claim 6, further comprising:
   obtaining a second correspondence, and determining, based on the second correspondence, the interval corresponding to the resource reservation period, wherein the second correspondence is a correspondence between at least one resource reservation period and at least one interval, the at least one resource reservation period comprises the resource reservation period, and the at least one interval comprises the interval.

8. The method according to claim 1, wherein the first information comprises the resource reservation period, the first parameter comprises the interval, and the obtaining a first parameter based on the first information comprises: determining the interval based on a resource reservation period set to which the resource reservation period belongs, wherein the resource reservation period set comprises at least one resource reservation period, and the at least one resource reservation period comprises the resource reservation period.

9. The method according to claim 8, wherein when a size of the resource reservation period does not exceed a specified time length, the interval meets:

$$\mathbf{P_{step}} = \max\{\min\_P, Pt\};$$

or

$$\mathbf{P_{step}} = \min\{\min\_P, Pt\},$$

wherein

min_P is a least common multiple of all resource reservation periods in the at least one resource reservation period, and Pt is a specified value;
Pstep is a smallest resource reservation period in the at least one resource reservation period; or
Pstep is a largest resource reservation period in the at least one resource reservation period.

10. The method according to claim 9, wherein the specified time length is predefined or configured by using signaling.

11. The method according to any one of claims 1 to 10, wherein the first information comprises the size of the sensing window, the first parameter comprises the quantity of candidate resources, and the obtaining a first parameter based on the first information comprises:
determining, based on the size of the sensing window, the quantity of candidate resources corresponding to the size of the sensing window.

12. The method according to claim 11, further comprising:
obtaining a third correspondence, wherein the third correspondence comprises a correspondence between the size of the at least one sensing window and a quantity of at least one candidate resource, the size of the at least one sensing window comprises the size of the sensing window, and the quantity of the at least one candidate resource comprises the quantity of candidate resources.

13. The method according to any one of claims 1 to 10, wherein the first parameter comprises the interval, the interval is represented as $\alpha * Pstep$, $\alpha$ is determined based on the first information, and Pstep is a constant.

14. The method according to any one of claims 1 to 13, wherein the candidate resource comprises Y slots, an interval between a last slot y in the Y slots and a slot m of detected control information on the candidate listening resource is less than or equal to a second parameter, and the second parameter is any one of the following:

$$P'_{rsvp\_RX} + P'_{T_{scal}};$$

$$P'_{rsvp\_RX} + Y;$$

$$P'_{rsvp\_RX} + P_{step};$$

or

$$P_{step} + Y,$$

wherein

$P'_{rsvp\_RX}$ represents a quantity of logical slots in the resource reservation period; and

$P'_{T_{scal}}$ represents a quantity of logical slots in the resource selection window.

15. The method according to claim 14, wherein the slot y and the slot m are physical slots or logical slots in a resource pool.

16. The method according to any one of claims 1 to 15, wherein the first parameter comprises a first interval between the candidate listening resources, the first interval is determined based on a resource reservation period that is not less than the specified time length, and the method further comprises:
obtaining second information, wherein the second information indicates a first sensing window, a size of the first sensing window is determined based on the first interval, a first time window is located before a first time domain position, and the first time domain position is a moment at which a terminal device is triggered to determine the transmission resource.

17. The method according to any one of claims 1 to 16, wherein the first parameter further comprises a third interval between the candidate listening resources, the third interval is determined based on the resource reservation period that is less than the specified time length, and the method further comprises:
obtaining third information, wherein the third information indicates a second sensing window, a size of the second sensing window is determined based on the third interval, the second sensing window is located after the first time domain position, and the first time domain position is the moment at which the terminal device is triggered to determine the transmission resource.

18. A transmission resource determining method, comprising:

determining first information, wherein the first information comprises at least one of a size of a resource selection window, a size of a sensing window, or a resource reservation period, the first information is used to determine a first parameter, and the first parameter is used to determine, in a candidate resource, a transmission resource for sidelink transmission; and
sending the first information to a terminal device.

19. The method according to claim 18, further comprising:
sending at least one of the following to the terminal device:

a first correspondence, wherein the first correspondence is a correspondence between a size of at least one sensing window and at least one interval, the size of the at least one sensing window comprises the size of the sensing window, and the at least one interval comprises an interval;
a second correspondence, wherein the second correspondence is a correspondence between at least one resource reservation period and at least one interval, the at least one resource reservation period comprises the resource reservation period, and the at least one interval comprises the interval; or
a third correspondence, wherein the third correspondence comprises a correspondence between a size of at least one sensing window and a quantity of at least one candidate resource, the size of the at least one sensing window comprises the size of the sensing window, and the quantity of the at least one candidate resource comprises a quantity of candidate resources.

20. The method according to claim 18 or 19, wherein the first parameter comprises a first interval between candidate listening resources, the first interval is determined based on a resource reservation period that is not less than a specified time length further, and the method further comprises:
sending second information to the terminal device, wherein the second information indicates a first sensing window, the first sensing window is located before a first time domain position, a size of the first sensing window is determined based on the first interval, and the first time domain position is a moment at which the terminal device is triggered to determine the transmission resource.

21. The method according to claim 20, wherein the first parameter further comprises a third interval between the candidate listening resources, the third interval is determined based on the resource reservation period that is less than the specified time length, and the method further comprises:
sending third information to the terminal device, wherein the third information indicates a second sensing window, a size of the second sensing window is determined based on the third interval, and the second sensing window is located after the first time domain position.

**22.** A communication apparatus, comprising:

a processing module, configured to obtain first information, wherein the first information comprises at least one of a size of a resource selection window, a size of a sensing window, or a resource reservation period; the processing module is configured to obtain a first parameter based on the first information, wherein the first parameter comprises an interval between candidate listening resources and/or a quantity of candidate resources, and the candidate resources are within the resource selection window; and the processing module is configured to determine, in the candidate resources based on the first parameter, a transmission resource for sidelink transmission.

**23.** The communication apparatus according to claim 22, wherein the first information comprises the size of the resource selection window, the first parameter comprises the interval, and the interval and the size of the resource selection window meet:

$$\mathbf{P_{step}} = \left\lceil \frac{N}{M} \cdot T_{scal} \right\rceil, \ \mathbf{P_{step}} = floor\left\{ \frac{N}{M} \cdot T_{scal} \right\}, \ \text{or} \ \mathbf{P_{step}} = \frac{N}{M} \cdot T_{scal},$$

wherein

$P_{step}$ is the interval;
N is a quantity of time units used for sidelink transmission in first duration, a length of the first duration is M slots or M milliseconds, M and N are positive integers, $\lceil\ \rceil$ represents rounding up, and **floor{ }** represents rounding down; and
$T_{scal}$ is the size of the resource selection window.

**24.** The communication apparatus according to claim 22, wherein the first information comprises the size of the sensing window, the first parameter comprises the interval, and the processing module is specifically configured to:

determine, based on the size of the sensing window, the interval corresponding to the size of the sensing window; or
determine, based on the size of the sensing window, the interval that meets a first function relationship with the size of the sensing window.

**25.** The communication apparatus according to claim 24, wherein the processing module is further configured to:
obtain a first correspondence, wherein the first correspondence is a correspondence between a size of at least one sensing window and at least one interval, the size of the at least one sensing window comprises the size of the sensing window, and the at least one interval comprises the interval.

**26.** The communication apparatus according to claim 24, wherein the first function relationship between the size of the sensing window and the interval comprises:

$$\mathbf{P_{step}} = \frac{P_T}{L}, \ \mathbf{P_{step}} = \left\lceil \frac{P_T}{L} \right\rceil, \ \text{or} \ \mathbf{P_{step}} = floor\{\frac{P_T}{L}\},$$

wherein
$P_{step}$ is the interval, $P_T$ is the size of the sensing window, L is a specified value, or L is indicated by a network device, and L is a positive integer.

**27.** The communication apparatus according to claim 22, wherein the first information comprises the resource reservation period, the first parameter comprises the interval, and the processing module is specifically configured to:
determine the interval corresponding to the resource reservation period.

**28.** The communication apparatus according to claim 27, wherein the processing module is further configured to:
obtain a second correspondence, and determine, based on the second correspondence, the interval corresponding to the resource reservation period, wherein the second correspondence is a correspondence between at least one resource reservation period and at least one interval, the at least one resource reservation period comprises the resource reservation period, and the at least one interval comprises the interval.

**29.** The communication apparatus according to claim 28, wherein the first information comprises the resource reservation period, the first parameter comprises the interval, and the processing module is specifically configured to: determine the interval based on a resource reservation period set to which the resource reservation period belongs, wherein the resource reservation period set comprises the at least one resource reservation period, and the at least one resource reservation period comprises the resource reservation period.

**30.** The communication apparatus according to claim 29, wherein when a size of the resource reservation period does not exceed a specified time length, the interval meets:

$$\mathbf{P_{step}} = \max\{\min\_P, Pt\};$$

or

$$\mathbf{P_{step}} = \min\{\min\_P, Pt\},$$

wherein

min_P is a least common multiple of all resource reservation periods in the at least one resource reservation period, and Pt is a specified value;
Pstep is a smallest resource reservation period in the at least one resource reservation period; or
Pstep is a largest resource reservation period in the at least one resource reservation period.

**31.** The communication apparatus according to claim 30, wherein the specified time length is predefined or configured by using signaling.

**32.** The communication apparatus according to any one of claims 22 to 31, wherein the first information comprises the size of the sensing window, the first parameter comprises the quantity of candidate resources, and the processing module is specifically configured to: determine, based on the size of the sensing window, the quantity of candidate resources corresponding to the size of the sensing window.

**33.** The communication apparatus according to claim 32, wherein the processing module is further configured to: obtain a third correspondence, wherein the third correspondence comprises a correspondence between the size of the at least one sensing window and a quantity of at least one candidate resource, the size of the at least one sensing window comprises the size of the sensing window, and the quantity of the at least one candidate resource comprises the quantity of candidate resources.

**34.** The communication apparatus according to any one of claims 22 to 33, wherein the first parameter comprises the interval, the interval is represented as $\alpha*$Pstep, $\alpha$ is determined based on the first information, and Pstep is a constant.

**35.** The communication apparatus according to any one of claims 22 to 34, wherein the candidate resource comprises Y slots, an interval between a last slot y in the Y slots and a slot m of detected control information on the candidate listening resource is less than or equal to a second parameter, and the second parameter is any one of the following:

$$P'_{rsvp\_RX} + P'_{T_{scal}};$$

$$P'_{rsvp\_RX} + Y;$$

$$P'_{rsvp\_RX} + P_{step};$$

or

$$P_{step} + Y,$$

wherein

$P'_{rsvp\_RX}$ represents a quantity of logical slots in the resource reservation period; and

$P'_{T_{scal}}$ represents a quantity of logical slots in the resource selection window.

36. The communication apparatus according to claim 35, wherein the slot y and the slot m are physical slots or logical slots in a resource pool.

37. The communication apparatus according to any one of claims 22 to 36, wherein the first parameter comprises a first interval between the candidate listening resources, the first interval is determined based on a resource reservation period that is not less than the specified time length, and the processing module is further configured to:
obtain second information, wherein the second information indicates a first sensing window, a size of the first sensing window is determined based on the first interval, the first time window is located before a first time domain position, and the first time domain position is a moment at which a terminal device is triggered to determine the transmission resource.

38. The communication apparatus according to any one of claims 22 to 37, wherein the first parameter further comprises a third interval between the candidate listening resources, the third interval is determined based on the resource reservation period that is less than the specified time length, and the processing module is further configured to:
obtain third information, wherein the third information indicates a second sensing window, a size of the second sensing window is determined based on the third interval, the second sensing window is located after the first time domain position, and the first time domain position is the moment at which the terminal device is triggered to determine the transmission resource.

39. A communication apparatus, comprising:

a processing module, configured to determine first information, wherein the first information comprises at least one of a size of a resource selection window, a size of a sensing window, or a resource reservation period, the first information is used to determine a first parameter, and the first parameter is used to determine, in a candidate resource, a transmission resource for sidelink transmission; and
a transceiver module, configured to send the first information to a terminal device.

40. The communication apparatus according to claim 39, wherein the transceiver module is further configured to:
send at least one of the following to the terminal device:

a first correspondence, wherein the first correspondence is a correspondence between a size of at least one sensing window and at least one interval, the size of the at least one sensing window comprises the size of the sensing window, and the at least one interval comprises an interval;
a second correspondence, wherein the second correspondence is a correspondence between at least one resource reservation period and at least one interval, the at least one resource reservation period comprises the resource reservation period, and the at least one interval comprises an interval; or
a third correspondence, wherein the third correspondence comprises a correspondence between a size of at least one sensing window and a quantity of at least one candidate resource, the size of the at least one sensing window comprises the size of the sensing window, and the quantity of the at least one candidate resource comprises a quantity of candidate resources.

41. The communication apparatus according to claim 39 or 40, wherein the first parameter comprises a first interval between candidate listening resources, the first interval is determined based on a resource reservation period that is not less than a specified time length, and the transceiver module is further configured to:
send second information to the terminal device, wherein the second information indicates a first sensing window, the first sensing window is located before a first time domain position, a size of the first sensing window is determined based on the first interval, and the first time domain position is a moment at which the terminal device is triggered to determine the transmission resource.

42. The communication apparatus according to any one of claims 39 to 41, wherein the first parameter further comprises a third interval between the candidate listening resources, the third interval is determined based on the resource reservation period that is less than the specified time length, and the transceiver module is further configured to: send third information to the terminal device, wherein the third information indicates a second sensing window, a size of the second sensing window is determined based on the third interval, the second sensing window is located after the first time domain position, and the first time domain position is the moment at which the terminal device is triggered to determine the transmission resource.

43. A communication apparatus, comprising:

a memory, configured to store instructions; and
a processor, configured to invoke the instructions from the memory and run the instructions, so that the communication apparatus performs the method according to any one of claims 1 to 17.

44. A communication apparatus, comprising:

a memory, configured to store instructions; and
a processor, configured to invoke the instructions from the memory and run the instructions, so that the communication apparatus performs the method according to any one of claims 18 to 21.

45. A communication system, comprising the communication apparatus according to any one of claims 22 to 38 or 43 and the communication apparatus according to any one of claims 39 to 42 or 44.

46. A computer-readable storage medium, wherein the computer-readable storage medium stores instructions; and when the instructions are invoked and executed on a computer, the computer is enabled to perform the method according to any one of claims 1 to 21.

47. A computer program product, wherein when the computer program product runs on a computer, the computer is enabled to perform the method according to any one of claims 1 to 21.

48. A circuit, wherein the circuit is coupled to a memory, and the circuit is configured to read and execute a program stored in the memory to perform the method according to any one of claims 1 to 21.

FIG. 1

Wireless communication system

FIG. 2

FIG. 3

| Processing module 410 | Transceiver module 420 |

FIG. 4

Antenna

510

Radio frequency circuit

520

Memory

Processor

Input/Output apparatus

FIG. 5

| Processing module 610 | Transceiver module 620 |

FIG. 6

711

710

712

Antenna

Radio frequency unit

Board

721    722

Memory    Processor

720

FIG. 7

```
┌─────────────────────────────────────────────────────────────┐
│           S101: Obtain first information                     │
└─────────────────────────────────────────────────────────────┘
                              │
                              ▼
┌─────────────────────────────────────────────────────────────┐
│  S102: Determine a first parameter based on the first information │
└─────────────────────────────────────────────────────────────┘
                              │
                              ▼
┌─────────────────────────────────────────────────────────────┐
│  S103: Determine, in candidate resources based on the first  │
│  parameter, a transmission resource for sidelink transmission │
└─────────────────────────────────────────────────────────────┘
```

FIG. 8

FIG. 9

FIG. 10

n

$t_y-9P_{step}$    $t_y-2P_{step}$    $t_y-P_{step}$    $t_y$

$t_y-10P_{step}$    ...

$n-T_0$    $n-T_{proc,0}$    $n+T_{PDB}$

$n+T_{proc,1}$    $n+T_{2min}$

First sensing window

$n+T_1$    $n+T_2$

## FIG. 11

n

Sub-window

$t_y-9P_{step}$    $t_y-2P_{step}$    $t_y-P_{step}$

$t_y-10P_{step}$    ...

$n-T_0$    $n-T_{proc,0}$    $t_y$    $n+T_{2min}$    $n+T_{PDB}$

Second sensing window

First sensing window

## FIG. 12

|  | INTERNATIONAL SEARCH REPORT | International application No. |
|---|---|---|
|  |  | **PCT/CN2020/121689** |

**A.    CLASSIFICATION OF SUBJECT MATTER**

H04W 72/04(2009.01)i

According to International Patent Classification (IPC) or to both national classification and IPC

**B.    FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

DWPI; CNABS; USTXT; WOTXT; EPTXT; CNTXT; CNKI; 3GPP: v2x, 侧链, 候选资源, 选择窗, 监听窗, 间隔, 非周期, sidelink, candidate resource, selection window, sensing window, interval, aperiodic

**C.    DOCUMENTS CONSIDERED TO BE RELEVANT**

| Category* | Citation of document, with indication, where appropriate, of the relevant passages | Relevant to claim No. |
|---|---|---|
| X | CN 108024273 A (BEIJING SAMSUNG TELECOM R&D CENTER et al.) 11 May 2018 (2018-05-11)<br>  description, paragraphs [0044]-[0084] | 1-48 |
| A | CN 111771388 A (BEIJING XIAOMI MOBILE SOFTWARE CO., LTD.) 13 October 2020 (2020-10-13)<br>  entire document | 1-48 |
| A | US 20200314804 A1 (SAMSUNG ELECTRONICS CO., LTD.) 01 October 2020 (2020-10-01)<br>  entire document | 1-48 |
| A | WO 2019066629 A1 (LG ELECTRONICS INC.) 04 April 2019 (2019-04-04)<br>  entire document | 1-48 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance |  |  |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means |  |  |
| "P" | document published prior to the international filing date but later than the priority date claimed | "&" | document member of the same patent family |

| Date of the actual completion of the international search | Date of mailing of the international search report |
|---|---|
| **29 June 2021** | **07 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** |  |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/121689**

| Patent document cited in search report | | | Publication date (day/month/year) | Patent family member(s) | | | Publication date (day/month/year) |
|---|---|---|---|---|---|---|---|
| CN | 108024273 | A | 11 May 2018 | EP | 3530047 | A1 | 28 August 2019 |
| | | | | EP | 3530047 | A4 | 30 October 2019 |
| | | | | US | 2020059897 | A1 | 20 February 2020 |
| CN | 111771388 | A | 13 October 2020 | None | | | |
| US | 20200314804 | A1 | 01 October 2020 | None | | | |
| WO | 2019066629 | A1 | 04 April 2019 | CN | 111149397 | A | 12 May 2020 |
| | | | | EP | 3672338 | A1 | 24 June 2020 |

Form PCT/ISA/210 (patent family annex) (January 2015)